(19) Europäisches Patentamt
European Patent Office
Office européen des brevets

(11) Publication number: 0 376 183 A1

# (12) EUROPEAN PATENT APPLICATION

(21) Application number: 89123736.4

(51) Int. Cl.5: C04B 35/58, C04B 35/56

(22) Date of filing: 22.12.89

(30) Priority: 28.12.88 JP 332045/88

(43) Date of publication of application: 04.07.90 Bulletin 90/27

(84) Designated Contracting States: DE FR GB

(71) Applicant: Chisso Corporation
6-32, Nakanoshima 3-chome Kita-ku
Osaka-shi Osaka-fu(JP)

(72) Inventor: Ayama, Koichi
6-1, Tsukizi
Minamata-shi Kumamoto-ken(JP)
Inventor: Noake, Kaneo
2-4-1, hachiman-cho
Minamata-shi Kumamoto-ken(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

## (54) Ceramic composition and method for producing the same.

(57) Ceramic composition and method for producing the same, characterised by sintering a molded product comprising polysilazane and at least one of silicon nitride powder and silicon carbide powder;
said polysilazane which have a skelton structure having the repeating units of the formula:

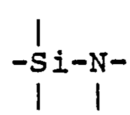

and precursor residues having the structural units represented by the formula at least one component selected from:

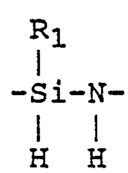 , 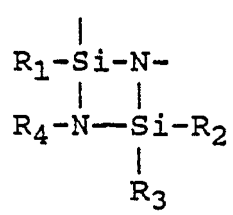 , 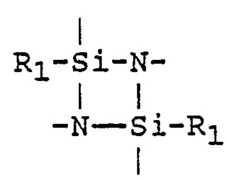

and connects each other;
in a state without sintering aid, under sintering condition of pressurized atomosphere at least one of nitrogen and ammonia at 800° C to 2200° C.

EP 0 376 183 A1

# CERAMIC COMPOSITION AND METHOD FOR PRODUCING THE SAME

## BACKGROUND OF THE INVENTION

1. Field of the Invention:

The present invention relates to a novel ceramic composition excellent in heat resistance and corrosion resistant properties, which contains no sintering aid.

2. Description of the Prior Art:

As a means for obtaining a sintered product of silicon nitride ($Si_3N_4$) or silicon carbide (SiC), there are adopted the reaction sintering method, unpressure sintering method, hot pressed sintering method, and gas pressurized sintering method, etc. In the sintering of silicon carbide, the mixture of $\alpha$-SiC powder and graphite powder is used as a basic material, and a binder is added thereto, and after molding by use of various molding method, and after removing the binder, silicon is melted and heat treated in a vacuum furnace at 1600 to 1700° C to let the graphite in the molded product react with silicon to form $\beta$-SiC.

On the other hand, in the reaction sintering method of silicon nitride, metallic silicon powder is used as a starting material, and in the same manner as in the case of SiC, after adding a binder and molding the mixture, the binder is removed. Thereafter, by effecting heat treatment in a nitrogen atmosphere at 1200 to 1400° C, nitrogen enters into the vacant space of the metal silicon molded product to react with metallic silicon to form $Si_3N_4$.

In such a manner as described above, the reaction sintering method sinters SiC or $Si_3N_4$ powder, but either of them are necessary to sinter altogether with a restricted conditions. When the sintering temperature is raised, since $Si_3N_4$ decomposes to Si and $N_2$, oxide such as $Al_2O_3$, MgO, etc., is added as a sintering aid in an amount of more than several %, and by letting a liquid phase be formed from $Si_3N_4$ and the sintering aid, sintering is carried out at a considerably low temperature of from 1650° C to 1700° C.

Also, in the case of SiC, a small amount of boron (B) and carbon (C) is added, and after removing binder from the molded product, it is sintered in an inert gas or in a vacuum at the temperature of more than 1800° C. Also, in the gas pressurizing sintering method of $Si_3N_4$, since the pressure of atmospheric $N_2$ is raised to prevent the decomposition of $Si_3N_4$, as the sintering temperature can be raised, the amount of the sintering aid can be made little, and a dense sintered product having high strength at high temperature can be obtained. For example, under the conditions of, for example, $N_2$/10 atm. and the sintering temperature of 1800° C, a $Si_3N_4$ sintered product having the density of 90 and several % of the theoretical density can be obtained.

However, as the problem of the conventional technology, in the reaction sintering method, it is required to let $N_2$ and the melt of Si be diffused into the inside of the molded product to react, the sintering time is required to be lengthened. In the unpressure sintering method, although the sintering time can be shortened in comparison with that of the reaction sintering method, in the case of $Si_3N_4$, a sintering aid is added in any way into it, the mechanical strength at a high temperature such as the bending strength becomes lowered, and a long time is required for uniformly mixing the sintering aid together with $Si_3N_4$ and SiC powders. Also, since the volume shrinkage in the sintering is large, it is difficult to obtain a sintered product having high dimensional accuracy. Furthermore, in the gas pressurizing sintering, although the amount of the sintering aid can be reduced, the lowering of the high temperature strength can not be avoided, and when the amount of the sintering aid is reduced, the uniform mixing of the powder becomes more difficult. Also, the volume shrinkage in the sintering time becomes large, and it is difficult to obtain a sintered product having high dimensional accuracy. Further, in the conventional technology, the removing process of the binder in the molded product is required to be carried out before sintering. Such a binder is used to endow the moldability to the ceramic powder, and although the amount of use thereof is different with the molding method and technology, for example, in a mechanical press, it is 4 to 14 wt%, in a thermal extrusion 8 to 25 wt%, and in the injection molding, 10 to 25 wt%. In general, the more complicated shape the molded product has, the longer time is required for the binder removal process.

## SUMMARY OF THE INVENTION

In view of the status as described above, the present inventors have eagerly investigated, and as a result have completed a method for obtaining a silicon nitride or silicon carbide sintered product having small shrinkage in the sintering time, without requiring a sintering aid, and without a degreasing process, and moreover, in a short time.

The present invention is a method for producing a ceramic compound and a ceramic composition obtained thereby, and characterised by that a molded product comprising of at least one component selected from silicon nitride powder, silicon carbide powder, and polysilazane represented by the following formula (A), (B), or (C) is formed by sintering in a state without sintering aid under pressurised component at least one selected from nitrogen, ammonia in sintering atmosphere at 800 to 2200 °C.

Wherein, the formula (A) represents polysilazane which have a skeleton structure having the repeating unit of the formula:

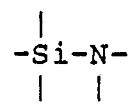

and in which polysilazane, a plurality of precursor residues having the unit represented by the formula:

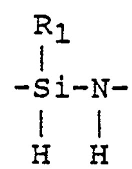

forming structural unit represented by the formula:

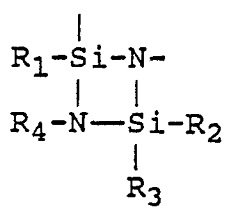

and are a part being connected to each other by the structural units represented by the formula:

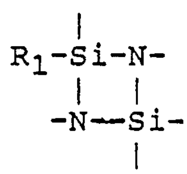

Also, as to the formula (B), it denotes polysilazane which have the skeleton structure having the repeating units of the formula:

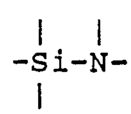

and residues having the repeating units of the formula:

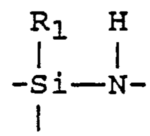

are connected to each other by the structural units having the formula:

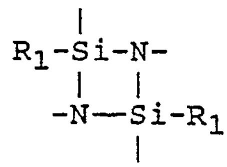

and the above-described precursor is constituted of such units having the formula:

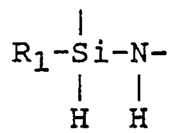

and the formula:

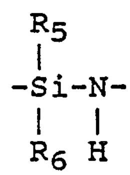

Further, the formula (C) denotes polysilazane which have a skeleton structure having the repeating units of the formula:

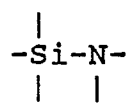

and a plurality of precursor residues having the unit of the formula

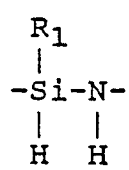

partly become the structural units of the formula:

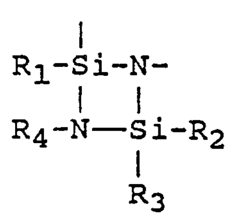

and partly are connected to each other by the structural units of the formula:

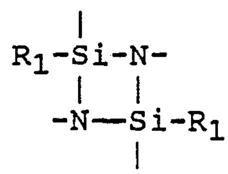

and further, a part of the above-described precursor is constituted of the units of the formula:

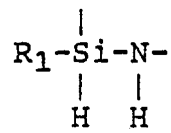

or the formula:

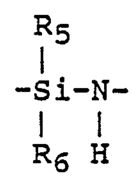

Further, in respective formulae (A), (B) and (C), $R_1$, $R_2$, $R_3$, $R_4$, $R_5$ and $R_6$ are hydrogen (except for $R_4$, $R_5$, $R_6$), a lower alkyl group having from 1 to 6 carbon atoms such as methyl, ethyl, n-propyl, isopropyl, etc., substituted or unsubstituted vinyl group, substituted or unsubstituted allyl group, substituted or unsubstituted lower aryl group having from 6 to 10 carbon numbers such as phenyl, tolyl, xylic, etc., tri-(lower) alkyl or di-(lower) alkylsilyl group such as trimethyl, dimethyl, methyl-ethyl, triethyl-sylil, etc., or di-(lower)-alkylamino group (except for $_{R4}$). Moreover, $R_1$, $R_2$, $R_3$, $R_4$, $R_5$ and $R_6$ may be the same or different.

Further, as to the above-described polysilazane (A), (B) and (C), and the production methods thereof, the present applicant has already applied in

(1) Japanese Patent Application No. 146657/1987 (Laid-open No. 309576/1988) [US Patent Application No. 205277/07, EP Application No. 88109319 (Laid-open EP-296434)]

(2) Japanese Patent Application No. 146658/1987 (Laid-open No. 309527/1988), [US Patent Application 205278/07, EP Application No. 88109318 (Laid-open EP-296433)

## DETAILED DESCRIPTION OF THF INVENTION

In the present invention, the above-described polysilazane was mixed and kneaded with $Si_3N_4$ and/or SiC powder without the sintering aid, and after molding the mixture, by sintering the molded product as it is, it was succeeded to obtain a ceramic composition of the $Si_3N_4$ or SiC material having sufficient mechanical strength by use of a shorter process.

Other and further objects, features and advantages of the invention will appear more fully from the following description.

The above-described respective polysilazane can form $Si_3N_4$, when the molded product is sintered under the pressurized atmosphere of $NH_3$ at the temperature of 800 to 2200°C, or when the molded product is sintered under the pressurized atmosphere of $N_2$ at the temperature of 800 to 2200°C, a mixture of $Si_3N_4$ and SiC, respectively, in a high yield, and ceramics having Si, C, and N as the main component can be formed in a high yield without using a sintering aid. Due to such a fact, in the case when the above-described polysilazane was used as a binder, there is little amount of gas decomposed and vaporized in sintering, so that such damages as cracks and expansion are difficultly generated, and moreover, the removing procedure of the binder is not required. Also, polysilazane of the present invention is soluble in an organic solvent similarly as in the case of general organic high molecular compound, and it combinedly

possesses such properties as to become softened by heating, and the general molding methods such as, for example, the extrusion molding, injection molding, liquid mud casting molding, pressurized powder molding, etc., are possible.

Furthermore, when the above-described polysilazane is mixed and kneaded with $Si_3N_4$ an/or SiC powder without a sintering aid, and the molded product is sintered as it is, a ceramic composition having sufficient strength can be obtained even in the case without a sintering aid. Surprisingly, even in the sintering at a low temperature such as about 1,000 ° C, there can be obtained such a strength as to be able to match for that of the reaction sintered product, and the sintering time is by far shorter in comparison with that of the reaction sintering method. Also, since a sintering aid is not added, there is not such a defect as that the high temperature strength of even the $Si_3N_4$ material sintered product obtained in the present method becomes lowered. Further, the linear shrinkage also is suppressed to be less than 0 to 6%, and a sintered product having high dimensional accuracy can be obtained.

According to the method of the present invention, a mixture comprising $Si_3N_4$ powder and/or SiC powder and the above-described polysilazane can be formed by the molding method of ceramics such as the thermoplastic molding, liquid mud casting molding, press molding etc., and the molded product can be sintered under a pressurized state of $N_2$ or $NH_3$ and the mixed gas thereof (in need, an inert gas such as argon may be mixed), at a temperature of 800 to 2200 ° C.

$Si_3N_4$ powder and SiC powder may be the ones hitherto used, but those which contain little impurities are preferable. The above-described polysilazane forms a ceramic composition which is changed in composition by the sintering temperature, sintering atmosphere and the pressure of the atmosphere. For example, in order to obtain a silicon nitride ceramics, $Si_3N_4$ powder is selected as raw material, and the temperature of not decomposing $Si_3N_4$ and the $N_2$ pressure are selected. Although the sintering temperature is 800 to 2200 ° C, when it is less than 1400 ° C, ceramics comprising Si, N, C as main components is formed, and when it is higher than that, $Si_3N_4$ or a mixture $Si_3N_4$/SiC is formed. This is because there is formed $Si_3N_4$ from the above-described polysilazane, and SiC from C therefore, the formation of SiC is restrained, when the $N_2$ pressure is the higher.

Also, when the atmosphere of $NH_3$ or the $NH_3/N_2$ mixed gas is used, C in polysilazane is almost removed. In the case of obtaining silicon carbide ceramics, SiC is selected as raw material powder, and the sintering temperature is 800 to 2200 ° C.

In this case, similarly, the composition of the ceramics formed from polysilazane is changed by the pressure and temperature of the atmosphere. The atmosphere may be any of $N_2$, Ar, and He. Furthermore, the mixed powder of $Si_3N_4$ and SiC may be used as raw material powder.

Although the addition amount of the above-described polysilazane to the raw material powder is different depending on the molding method used, but the amount of approximately 5 to 80 vol% is preferable.

Also, the up-rise temperature speed of the sintering is preferably less than 15 ° C/min, and more preferably, less than 5 ° C/min up to 700 ° C. The above-described polysilazane is a polymer in which the main chain skeleton comprises Si and N, and the molecular formula or molecular structure is different in dependence to the production method thereof, and the yield of the ceramics is also variable. In the present invention, the ones as shown in the following have high yields of the ceramics and can be preferably used. Also, the number average molecular weight of polysilazane is approximately from 500 to 7000, and although this is also different in dependence to the molding method, the range of 800 to 1400 is preferable.

As the producing methods of the above-described polysilazane, there are such ones as described in the following. For example, as to the polysilazane of the formula (A), anhydrous ammonia is reacted in a solution with organodihalosilane $R_1SiHX_2$ to obtain a cyclic or straight chain silazane precursor, and while letting silazane or silylamine compound represented by the formula:

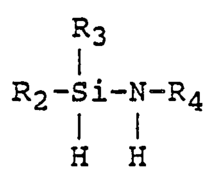

be coexisted in the precursor, the mixture is reacted under the presence of a basic catalyst having the ability of deprotonizing hydrogen atom from the nitrogen atom neighboring to the silicon atom to be dehydrated and cyclically bridged, and can be made have high molecular weight. Here, X denotes a halogen atom such as chlorine, bromine, etc. (the same as in the following).

Also, as to the polysilazane of the formula (B), anhydrous ammonia is reacted in a solution with organhalosilane mixture of $R_1SiHX_2$ and $R_5R_6SiX_2$, and thereby, is formed a cyclic or straight chain silazane precursor, and said precursor is deprotonized and cyclically bridged under the presence of a basic catalyst having the ability of deprotonizing hydrogen atom from the nitrogen atom neibouring to the silicon atom, and thus, a polymer can be produced.

Moreover, as to the polysilazane of the formula (C), anhydrous ammonia is reacted in a solution with organohalosilane ($R_1SiHX_2$ and $R_5R_6SiX_2$, and thereby, is formed a cyclic or straight chain silazane precursor, and while letting silazane or silylamine compound represented by the formula:

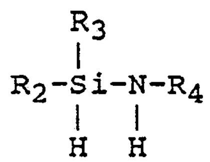

(D)

Be coexisted in the precursor, the mixture is under the presence of a basic catalyst having the ability of deprotonizing hydrogen from the nitrogen neibouring to the silicon atom to be dehydrated and cyclically bridged, and can be made have high molecular weight. In this case, especially, the content of the above-described (D) is 1 to 60 mol% and the content of $R_5R_6SiX_2$ is to 60 mol%, and it is preferable that the summed content of (D) and $R_5R_6SiX_2$ is 2 to 60 mol%.

Since the present invention is constituted in such a manner as described above, in the case when a ceramic composition is formed by using silicon nitride powder and/or silicon carbide powder, by using only the above described powders and polysilazane represented by the formula (A), (B) or (C), in addition to that the sintering time can be shortened to a large extent in comparison with that in the conventional sintering method, a good ceramic composition using utterly sintering aid or no binder which requires degreasing procedure, becomes able to be formed, and the simplification of the sintering procedure can be attained. Moreover, as the molding method to be adopted, various molding methods can be used, and not only the powder compressing molding method, but also such ones as the thermoplastic molding method, liquid mud casting method, doctor blade molding method, etc. can be used, and moreover, the formed ceramic composition has excellent physical properties such as the bending strength, linear shrinkage ratio, etc., even in the case of such a product as has been added without sintering aid, and there can be attained such useful effects that products having high dimensional accuracy and good mechanical strength can be produced.

## EXAMPLES

Next, concrete embodiments of the present invention will be explained.

Example 1:

To 96.7% of the $\alpha$-$Si_3N_4$ powder (SN-9S made by DENKIKAGAKU KOGYO KK) was added polysilazane having the number average molecular weight of about 1200 and in which all of $R_1$, $R_5$, and $R_6$ described in the above-described formula (B) is a methyl group, in a toluene solution, and the mixture was mixed and kneaded, and then, vacuum dried to obtain a powder in which $\alpha$-$Si_3N_4$ powder and the above-described polysilazane was uniformly dispersed.

The powder was put in a die made of iron with dimensions of 50 x 60 mm, and was subjected to uniaxial hot pressed molding at about 30 $Kg/cm_2$, and thereafter, it was molded in a hydraulic press of 3000 $Kg/cm^2$, and a molded product having 63% TD (true density). The molded product was put in an silicon nitride crucible with $Si_3N_4$ as the filling powder. In sintering, the temperature was raised in an 1 atmospheric pressure nitrogen atmosphere up to 700°C at the rate of 3/min, and up to 1100°C at the rate of 15°C/min. thereafter, up to 1650°C at the rate of 10°C/min. Subsequently, while keeping the pressure at 9.5 atmospheric pressure, the temperature was raised up to 1850°C at the rate of 10°C/min, and was kept for 3 hours and then, it was naturally cooled. The density of the sintered product obtained was 77% TD, linear shrinkage 6.4%, and bending strength 360 Mpa at room temperature.

Example 2:

To 88.5 wt% of $\alpha$-$Si_3N_4$ powder was added 11.5 wt% of polysilazane described in Example 1 in a toluene solution, and molding was effected in the gist of Example 1, and a molded product of 68.7% TD was obtained. This one was heated up to 700 °C at the rate of 3 °C/min under 1 atmospheric pressure nitrogen atmosphere, and thereafter, the temperature was raised up to 1200 °C at the rate of 15 °C/min, and kept there for 3 hours and then naturally cooled. The density of the sintered product obtained was 76.3% TD, linear shrinkage 0.7%, and bending strength 130 Mpa at room temperature.

Example 3:

To 90 wt% of $\alpha$-SiC powder (A-2 made by Showa Denko KK) was added 10 wt% of polysilazane described in Example 1 in a toluene solution, and molding was effected in the gist of Example 1 and a molded product of 66% TD was obtained. This one was sintered in the gist of Example 2. The density of the sintered product was 77% TD, linear shrinkage 0.5%, bending strength 180 Mpa at room temperature.

Example 4:

To 70.7 wt% of $\alpha$-$Si_3N_4$ powder was added 29.3 wt% of polysilazane described in Example 1 in a toluene solution, and in the gist of Example 1, a uniformly dispersed powder was obtained. The powder was put in a cylinder heated to 90 °C, and was extruded through a metal die of 1.0 mm diameter under the pressure of 100 $Kg/cm^2$ to obtain a cylindrical molded product of the diameter of 0.9 mm. This molded product was sintered in the gist of Example 1. The density of the sintered product obtained was 68.2% TD, and the linear shrinkage was 5.2%.

Example 5:

To 93 wt% of $\alpha$ -$Si_3N_4$ was added 7 wt% of polysilazane used in Example 1 in a toluene solution, and after stirring, a uniform slurry was obtained. This slurry was poured into a die, and treated under reduced pressure and by drying, a molded product was obtained. The molded product was sintered in the gist of Example 1. The density of the sintered product obtained was 65.8% TD, linear shrinkage 7.6%, and bending strength 150 Mpa at room temperature.

Example 6:

To 96.7 wt% of $\alpha$-$Si_3N_4$ powder was added 3.3 wt% of the polysilazane of above-described (A) in which all of the $R_1$, $R_2$, $R_3$, and $R_4$ is a methyl group, and the number average molecular weight is 1100, in a toluene solution, and in the gist of Example 1, molding and sintering were effected. The density of the sintered product obtained was 76.5% TD, linear shrinkage 6.4%, and bending strength 313 Mpa at room temperature.

Example 7:

To 93 wt% of $\alpha$-$Si_3N_4$ powder was added polysilazane of above-described (C), in which all of the $R_1$, $R_2$, $R_3$, $R_4$, $R_5$, and $R_6$ is a methyl group, and the number average molecular weight is 1200, in a toluene solution, and in the gist of Example 1, molding and sintering were effected. The density of the sintered product obtained was 78.4% TD, linear shrinkage 6.1%, bending strength 300 Mpa at room temperature.

Example 8:

To 82 wt% of $\alpha$-SiC powder was added 17 wt% of polysilazane of the above-described Example 6, in a toluene solution, and molding and sintering were effected in the gist of Example 1. The density of the

sintered product obtained was 77% TD, linear shrinkage 5.6% and bending strength 280 Mpa at room temperature.

Example 9:

To 88.5 wt% of α-Sic powder was added 11.5 wt% of polysilazane of the above-described Example 7, in a toluene solution, and molding and sintering were effected in the gist of Example 1. The density of the sintered product obtained was 76% TD, linear shrinkage 5.3% and bending strength 209 Mpa at room temperature.

Example 10:

To 83 wt% of β-SiC whisker (SCW made by Tateho Kagaku KK) was added 17 wt% of polysilazane of the above-described Example 1, in a toluene solution, and molding was effected similarly as in Example 5, and this molded product was sintered in the gist of Example 1. The density of the sintered product obtained was 67.2% TD, linear shrinkage 6.5%. bending strength 270 Mpa at room temperature.

## Claims

1. A method for producing a ceramic composition, characterised by sintering a molded product comprising at least one component selected from silicon nitride powder, silicon carbide powder, and polysilazane represented by the following formula (A), (B), or (C) is formed by sintering in a state without sintering aid, under pressurized component at least one selected from nitrogen, ammonia in sintering atmosphere at 800 to 2200 °C
wherein, the formula (A) represents a polysilazane which have a skeleton structure having the repeating units of the formula:

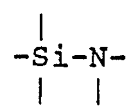

and in which polysilazane, a plurality of precursor residues having the units represented by the formula:

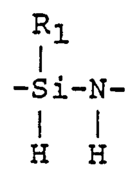

forming structural unit represented by the formula:

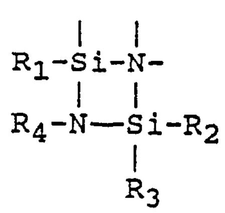

and a part being connected to each other by the structural unit represented by the formula:

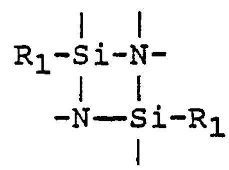

Further, in respective formulae, $R_1$, $R_2$, $R_3$, and $R_4$ denote such ones as hydrogen (except for $R_4$), a lower alkyl group having from 1 to 6 carbon atoms consisting of methyl, ethyl, n-propyl, isopropyl, etc.; a substituted or unsubstituted vinyl group; a substituted or unsubstituted allyl group; a substituted or unsubstituted lower aryl group having from 6 to 10 carbon atoms such as phenyl, tolyl, xylic, etc.; a tri-(lower)-alkyl, or di(lower) alkylsilyl group such as trimethyl, dimethyl, triethylsilyl, etc.; or a di-(lower) alkylamino group (except for $R_4$) such as dimethyl, diethyl, methylethyl, diisopropylamino, etc., and moreover, $R_1$, $R_2$, $R_3$ and $R_4$ may be the same or different.

The formula (B) denotes polysilazane which have the skeleton structure having a repeating unit represented by the formula:

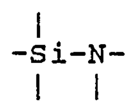

and the residues in the precursor having the repeating units represented by the formula:

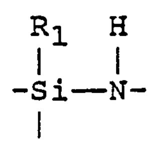

being connected to each other with the structure units represented by the formula:

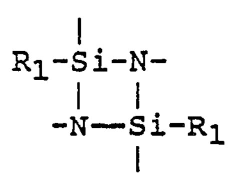

and the above-described precursor being constituted of the units represented by the formula:

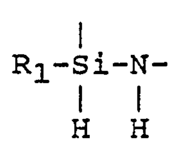

and the formula:

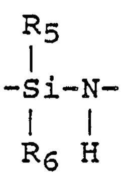

Further, in the formulae, definiting of $R_1$ is the same as that in the case of the formula (A), and $R_5$ and $R_6$ are lower alkyl group having from 1 to 6 carbon atoms such as methyl, ethyl, n-propyl, isopropyl, etc.; substituted or unsubstituted vinyl group; substituted or unsubstituted lower aryl group such as phenyl tolyl,

xylic, etc.; tri(lower) alkyl or di(lower) alkyl group such as trimethyl, dimethyl, triethylsilyl, etc.; or a di(lower) alkylamino group, and $R_1$, $R_5$, and $R_6$ may be the same or different.
The formula (C) is polysilazane which have skeleton structure having the repeating unit of the formula:

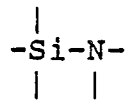

and a plurality of precursor residues having the unit represented by the formula:

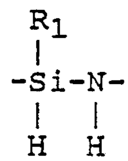

become partly the structure unit having the formula:

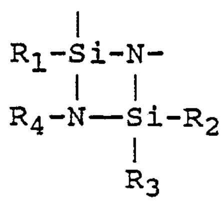

and are partly connected to each other by the structural unit having the formula:

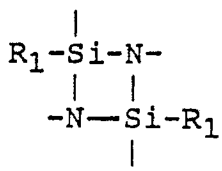

and further, a part of the precursor is constituted of the unit having the formula:

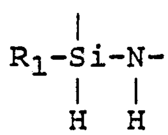

and the formula:

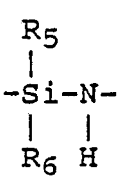

Further, each definitions of $R_1$, $R_2$, $R_3$, $R_4$, $R_5$, and $R_6$ are the same ones as in the above-described formula, (A) and (B), and $R_1$, $R_2$, $R_3$, $R_4$, $R_5$, and $R_6$ may be the same or different.

2. A method for producing a ceramic composition as claimed in Claim 1, wherein polysilazane is the one represented by the formula (A).

3. A method for producing a ceramic composition as claimed in Claim 1, wherein polysilazane is the

one represented by the formula (B).

4. A method for producing a ceramic composition as claimed in Claim 1, wherein polysilazane is the one represented by the formula (C).

5. A method for producing a ceramic composition as claimed in Claim l, wherein polysilzane is the one represented by the formula (A), and in the formula, polysilazan has a methyl group for all of $R_1$, $R_2$, $R_3$ and $R_4$.

6. A method for producing a ceramic composition as claimed in Claim 1, wherein polysilazane is the one represented by the formula (B), and in the formula, polysilazan has a methyl group for all of $R_1$, $R_2$ and $R_5$.

7. A method for producing a ceramic composition as claimed in Claim 1, wherein polysilazane is the one represented by the formula (C), and in the formula, polysilazan has a methyl group for all of $R_1$, $R_2$, $R_3$, $R_4$, $R_5$, and $R_6$.

8. A ceramic composition obtained by the production method as claimed in Claim 1.

European Patent Office

# EUROPEAN SEARCH REPORT

Application Number

EP 89 12 3736

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 482 669 (D. SEYFERTH et al.) * Abstract; column 3, paragraph 2; example 22 * --- | 1-8 | C 04 B 35/58<br>C 04 B 35/56 |
| Y | EP-A-0 079 678 (SUMITOMO ELECTRIC IND. LTD) * Claims 1,4,9 * --- | 1-8 | |
| Y,D | JP-A-63 309 526 (CHISSO CORP.) * claims 1-3; abstract * & EP-A-29 6434 --- | 1,8 | |
| Y,D | JP-A-63 309 527 (CHISSO CORP.) * Claims 1-3; abstract * & EP-A-29 6433 ----- | 1-8 | |

TECHNICAL FIELDS SEARCHED (Int. Cl.5)

C 04 B 35/00

The present search report has been drawn up for all claims

| Place of search | Date of completion of the search | Examiner |
|---|---|---|
| THE HAGUE | 30-03-1990 | HAUCK, H.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)